# EUROPEAN PATENT APPLICATION

(11) **EP 1 359 498 A2**
(43) Date of publication of application: **05.11.2003**
(21) Application number: 03251484.6
(22) Date of filing: 12.03.2003
(51) Int. Cl.: G06F 3/033

(54) **Selection of items from a list**

(30) Priority: 11.04.2002 US 120565
(71) Applicant: Agilent Technologies, Inc., Palo Alto, CA 94306 (US)
(72) Inventor: Nygaard, Richard A., Colorado Springs, CO 80918 (US)
(74) Representative: Jehan, Robert

(57) **Abstract**

An eye diagram analyzer (4)can assign a plurality of SUT data signals to be members of a labeled group of channels(14) merged into a composite eye diagram presentation(7). When a composite eye diagram is being displayed, the operator may select a channel(32) from among the group, and then have the pixels associated with that channel be displayed in an altered manner (highlighted) that allows them to be distinguished from all others, to determine if the behavior of that channel contributes to a condition in the eye diagram that is of interest. The menu(19/31) from which channels may be selected includes at least one button(22/23) in a fixed location, and which when clicked on, automatically selects the next item(34/35/36) in the list within that menu. In this way the mouse can be positioned just once, and then clicked as often as needed without further motion, allowing the operator to continuously observe, without re-direction of his visual attention, what effect, if any, is produced in the composite eye diagram. There may be one button for traversing the menu list in each direction. Traversing (automatic selection of an adjacent entry in the list) might be one step per click, or if the click is extended, be automatically repeated at some convenient rate. When one end of the list is reached the next selected item can be the item at the other end of the list.

## Description

The present invention relates to a method of selecting the next item in an ordered list of items and to menu apparatus.

The subject matter of the present application pertains to user interaction with software during the selection of an item from a menu, as for example, during actions taken to control the behavior of an apparatus operated through interaction with a computer system. The selection technique to be described arose during the development of a particular apparatus for the measurement of eye diagrams; although it is certainly not limited to eye diagram measurement. On the other hand, it is prudent to describe the selection technique as it is actually used in some definite environment for an actual apparatus, which at the moment is an eye diagram analyzer. And although we disclose herein the nature and the general principles ofthat eye diagram measurement apparatus in sufficient detail to allow a complete understanding of the invention, a tangible implementation of the measurement technique of that apparatus has complexity beyond what is easily summarized and is capable of performing additional functions. A preferred implementation of the measurement technique is the subject matter of a US Patent Application entitled METHOD AND APPARATUS FOR PERFORMING EYE DIAGRAM MEASUREMENTS bearing S/N 10/020,673 which was filed on 29 October 2001 by Richard A. Nygaard, Jr. and assigned to Agilent Technologies, Inc. Because the subject matter of that application is thus of interest to that of the present application (and is incorporated by reference) in yet other US applications that we intend to also incorporate herein by reference, and for the sake of brevity, "METHOD AND APPARATUS FOR PERFORMING EYE DIAGRAM MEASUREMENTS" is hereby expressly incorporated herein by reference.

Two other US Applications are also related to the subject matter disclosed herein. These are "COMPOSITE EYE DIAGRAMS", filed 31 January 2002, and "IDENTIFICATION OF CHANNELS AND ASSOCIATED SIGNAL INFORMATION CONTRIBUTING TO A PORTION OF A COMPOSITE EYE DIAGRAM", filed 28 March 2002. These contribute to an understanding of one specific exemplary embodiment of the present invention.

We have two threads to identify before they are woven together in a preferred embodiment. The first of these is a certain collection of issues concerning economy of action and ease of use while selecting items from a menu to control the behavior of some system, (possibly, but not necessarily, a measurement system) and which could be solely software, purely an apparatus, or some combination thereof. The menu is created by the execution of software or firmware by a processor, which could be a separate computer or perhaps an embedded system within an apparatus. It is also possible that the apparatus is a peripheral attached to a separate computer. The second thread is the particular example of such a menu item selection scheme found in the eye diagram analyzer of the incorporated Applications. To fully appreciate the example the reader needs to know a little bit about how an operator would like to use that piece of equipment. It will be appreciated, of course, that such an example is merely illustrative of a larger class of circumstances, for which a generalization will be offered. However, it is perhaps easiest to first approach the idea by way of a definite example, and that is our plan.

Drop-down menus displayed on a computer screen and actuated by a combination of screen pointer icon movements (e.g., according to corresponding motion with a mouse) and accompanying mouse clicks (appropriate pressing of a switch on the mouse) are commonplace. The existence of the menu is indicated by some legend (perhaps in a box), which might be the name of the menu, or, the name of a most recently selected item contained within the menu. In either case the ususal operation is for an operator to position the screen pointer icon (sometimes called a mouse sprite) over the legend and then perform a click. The entire menu then appears. The menu is a list of choices, and if there are more items in the menu than will fit in the space allocated for displaying the list, a scroll bar also appears and allows other portions of the complete list to become a selected subset that is the portion that is displayed. Thus, the entire list can still be accessed, even if it is just a portion at a time via scrolling. In any event, positioning the screen pointer icon over an item in the displayed list of the menu typically causes that item to be highlighted as a potential selection. Clicking an item actually selects it, whereupon the selected choice is put into effect, and the menu might then close itself automatically.

All of the major computer operating systems have, as part of their window management systems, Graphical User Interfaces (GUIs) which operate in this or a very similar way. And it is not so much that it does not work; it does. But using it does require that the operator's attention be directed to the menu presentation itself, and that correct mouse/screen pointer icon motion be produced. While that is happening the operator cannot be observing something else, which is perhaps something visible in another window or in a region elsewhere on the screen, or perhaps some indication/result in an apparatus separate from but controlled or affected by the mechanism of which the menu is a part. That is, it might be the case that the operator is physically unable to simultaneously view both the menu and the affected result. Furthermore, the operator's underlying purpose in all this is to cycle through all or some of the possible menu choices (make trial selections) with the aim of determining if one or more of them "makes a difference" in the affected result. The operator does not particularly care about the order in which the choices are tried; he just wants to find out which selections "make a difference," if any. He may, however, have an opinion or educated guess about where in the list of menu choices would be a good choice to begin the trial selections, so as to save some time and effort.

One example of such a situation is the second thread mentioned above, and we shall briefly sketch it next. But before we do, note that, as far as the operator is concerned, the physical steps needed to perform the desired selections from a conventional drop-down (or pop-up) menu include much repetition and require the repeated re-direction of his visual attention away from the item of prime concern: the display of some affected result. He may become disgusted that he is spending more time and effort getting the screen pointer icon in the right spot on the menu than observing and evaluating the outcome of the selection. And what is worse, he may actually miss the sought-for result, because it is a small part of an overall display of results that remains mostly unchanged, and his attention was focused on the pesky menu in order to perform the selection, rather than on the result and watching to see if "something happened." The idea here is that if you don't actually see "it" (the affected result) change (you look away to work the menu, and subsequently have to compare what result you see next with what you remember seeing before) you may not be able to tell if "it" changed or not. If "it" is a numerical value displayed as a sequence of digits, then memory may well be adequate. But if "it" is some kind of an image (like an eye diagram), then all bets are off, and the operator would very much like to "see it wiggle" as proof that such and such a selection makes a difference, and if it does, just how significant it is.

Eye diagrams are a conventional format for representing parametric information about signals, and especially digital signals. We shall refer to an item of test equipment or a measurement circuit arrangement that creates an eye diagram according to the method of the incorporated Application as an Eye Diagram Analyzer, or EDA for short. Modern eye diagram analyzers are apt to have a menu driven user interface of the sort described above. And before we proceed it will be useful to very briefly describe what they do and how one eye diagram analyzer of interest does it.

A modern eye diagram for a digital signal is not so much a trace formed continuously in the time domain, as it is an "eye" shape composed of closely spaced points (displayed dots, or illuminated pixels) representing many (probably at least thousands, easily millions, and perhaps orders of magnitude more) individual measurement samples taken upon separate instances of a signal occurring on a channel of interest. Each measurement sample contributes to a displayed dot. To borrow an idea from the world of analog oscilloscopes, it is as though an infinite persistence continuous time domain trace were cut apart into lengths corresponding to one, five or ten clock times, and then stacked on top of each other. In the sampled digital case however, portions of the eye shape only appear continuous because the dots are rather dense, owing to the large amount of data that is sampled. Unlike a true continuous technique, however, there may be detached dots that are separated from the main body of the eye shape. In any event, the vertical axis is voltage, and the horizontal axis represents the differences in time (i.e.,various offsets) between some reference event and the locations for the measurement samples. The time axis will generally have enough length to depict one complete eye-shape (cycle of a SUT signal) centered about the reference, with sometimes perhaps several additional eyes (cycles) before and after. In general, the number of cycles shown depends upon how the measurement is set up, and could be a large number. The reference event is the expected point in time when the value of an applied data signal would be captured by some receiving circuit in an SUT (System Under Test), and is derived from an application of the SUT's clock to the Eye Diagram Analyzer.

The substance of an eye diagram, then is that it represents various combinations of circumstances that occurred in the data signal being characterized. However, the eye diagram trace itself is not a single time domain waveform (think: 'single valued function'), but is instead a merging of many such instances; it can present multiple voltage (Y axis) values for a given time value (X axis). So, for example, the upper left-hand region of an eye (one cycle of an eye diagram) might represent the combination of an adequate logical one at an adequately early time relative to the SUT's clock signal, and an eye diagram whose traces pass robustly through that region indicates to us that a signal of interest is achieving a proper voltage at a proper time. Furthermore, we note that there are also other regions, say, near the center of an eye, that are not ordinarily transited by the trace, and which if that were indeed to happen, would presumably be an indication of trouble. Thickening of the traces is indicative of jitter, and so on. An eye diagram by itself cannot reveal in the time domain which isolated instance of the signal caused such an exception, as other types of measurements might, but it does provide timely and valid information about signal integrity within a system as it operates.

It is often the case that the utility of an eye diagram is needed for characterizing or discovering circumstances that are both erroneous and very occasional. It is also the case that some SUTs have a great many signals that are subject to investigation. Some busses have hundreds of member signals, for example. Each SUT signal to be measured is applied to a respective input channel of the EDA. Some EDA's have one hundred or more channels. When faced with such circumstances, the luxury of having one individual eye diagram trace per SUT signal disappears. We might measure it that way, and we can indeed display it that way (with four or maybe eight channels at a time), but we likely will have lost all patience with the whole process before we complete looking at twenty-five or more sets of four or more traces each. Surely that is the wrong way to go about analyzing the data. But on the other hand, automating the investigation is risky. Masking measurements, for example, require that we essentially decide ahead of time what is not of interest. The analyzer can apply the mask for us automatically and at great speed, but we will never know for sure that there was not some irregularity in there that met the mask criteria, but that would have been of interest to us anyway, if we had only seen it.

Accordingly, another tool has emerged to assist in eye diagram analysis for situations where measurements involve many channels. It is to simply merge into one combined eye diagram presentation a useful grouping of related signals. So now we have an eye diagram that probably has fat traces (indicating that, as expected, not all signals have simultaneous and identical rise times, voltage levels, etc.). Independent of that, we now expect that, having merged a related family of individual component eye diagrams together, if there is something unusual going on, even if occasionally for just one channel, we will, in principle, be able to see it.

We shall term such a combined eye diagram created from the merging of data for individual component eye diagrams a "composite" eye diagram. The details of creating composite eye diagrams are discussed in the incorporated "COMPOSITE EYE DIAGRAMS".

This merging of measurements in the displayed data of a composite eye diagram is fine as far as it goes. It greatly assists in discovering that there is some trouble in there, someplace. It allows us to cast a wide net, as it were. But the very property that gives us confidence that "it's in there, someplace" also poses the dilemma of how to separately identify it when it is "hiding in plain sight," so to speak. Say, at least one signal out of one hundred and twenty-eight was unable to drive its load. Presumably, there will be a visible indication of this situation in the shape of the composite eye diagram. But on account of which channel(s)?? To find out we need to avail ourselves of a way to quickly and easily isolate the culprit and discover who it is. (Fussing with the probes one signal at a time is almost never practical, and in some cases, is impossible as when the whole bus is probed at once by a single multiconductor connector.)

Fortunately, the EDA can alter the displayed composite eye diagram in a useful way to indicate which portions thereof are associated with a selected channel (i.e., "highlighting" a channel). We should like to select for highlighting, one channel at a time, from among the list of channels used to define the group for which the composite eye diagram was created. That list exists; it was created to define the group. What is taught herein provides a menu having that list allows one to select one of those channels, and then another and another, etc., while the selection is used to alter the composite eye diagram such that one can tell (through the highlighting) what parts of it are due to the selected channel.

It is known to arrange the EDA to alter by highlighting the nature of the displayed composite eye diagram according to the selection of a channel. That type of behavior is the subject matter of the incorporated "IDENTIFICATION OF CHANNELS AND ASSOCIATED SIGNAL INFORMATION CONTRIBUTING TO A PORTION OF A COMPOSITE EYE DIAGRAM". Unfortunately, existing methods of making the selection are either awkward or otherwise unsatisfactory. The first of these is what we might call the original basic menu selection operation. It consists of the elementary steps of opening the menu box to expose the list, followed by selecting an item in the list (which, if the list is long, may require an intermediate operation with a scroll bar to expose the desired item). All of these operations require diverting visual attention to how the screen pointer icon is positioned, so that the operator can click at the appropriate times. This diversion of attention nearly defeats the purpose of the operation, and is cause for considerable aggravation.

There are two other related streamlined techniques for expressing choices, which we shall describe next, but each of these fail to meet one or more operational requirements.

Consider the setting of the system clock of a Microsoft operating system, such as one of their Windows products or NT. As part of the screen for setting the clock the year appears in a box, with which is associated two arrow buttons. One can increment or decrement the year by clicking on the appropriate button. To change the time is similar, but one has to first click on the field to be affected. Note that there is no list of items in a menu here; the incrementing and decrementing follows rules for arithmetic. It is not the case that a next item in a list of arbitrarily arranged items is being selected. Furthermore, to get the selection to take effect, one has to further click on an "OK" or "Apply" button. So, using this paradigm, one cannot simply park the mouse over some icon and click repeatedly, while watching to see if anything interesting happens in the data.

The Excel97 application from Microsoft also has what we may term a streamlined technique for expressing choice. The basic screen for that application includes, in the bottom horizontal margin around the central work area, a scroll bar on the right and a collection of tabs for "sheets" on the left. A "sheet" is what is displayed in the central work area; which one it is can be changed by clicking on the associated tab. The scroll bar on the right pans the visible portion of a selected sheet within the work area, and is of adjustable size. (That is, the division of the bottom horizontal margin between tabs and scroll bar is adjustable.) The number of "sheets" can be increased to become considerable; to much more than there is space for displaying the associated tabs, even with a scroll bar of reduced size. To handle the situation of too many tabs, only some of the tabs are displayed, and a mechanism is provided to change which ones are displayed, so that a desired tab can be selected. This might be done with yet another associated scroll bar, but was instead implemented with four arrow buttons. Two of these incrementally step through the tabs, one button for each direction of traverse. The other two buttons go immediately to the end-most tab in either direction. It is possible, then, to park the screen pointer icon over one of the incremental buttons and repeatedly click until the desired tab becomes visible. However, one must still subsequently actually select the desired tab (by clicking on it) before the associated sheet (data) is displayed in the central work area.

As explained above, we should like to keep our visual attention focused on the display for the (to be modified by highlighting) composite eye diagram (the better to observe any changes), and not have to repeatedly redirect our attention to driving the mouse and the screen pointer to make the repeated menu selections happen. We should also like to have control over where in a menu list the repeated selection process initially begins, so as to save time and effort by not having to start at the top of the list. If the one of the conventional menu mechanisms is used, it won't be long before the operator becomes aggravated by an imbalance in the human factors of the user interface: he is spending too much time and effort to accomplish mere overhead operation. An operator of equipment should be concentrating on the larger problem at hand, and that is hard to do if he becomes disgusted with awkward operation of the tool he is trying to use.

The present invention seeks to provide an improved menu system.

According to an aspect of the present invention, there is provided a method of selecting a next item in an ordered list as specified in claim 1.

According to another aspect of the present invention, there is provided menu apparatus as specified in claim 6.

From the applications mentioned above it is known that an eye diagram analyzer can assign a plurality of SUT data signals to be members of a labeled group of channels for an eye diagram analyzer. There may be a plurality of such groups. It is also known that the measured data within a group can be merged into a composite eye diagram presentation in various different modes. Furthermore, when a composite eye diagram is being displayed, the operator may select a channel from among the group, and then have the pixels associated with that channel be displayed in an altered manner that allows them to be distinguished from all others, so that he can determine if the behavior of that channel contributes to a condition in the eye diagram that is of interest. The selection of a channel in the group thus produces an affected result. The menu from which channels may be selected includes at least one next selection icon (menu button) in a fixed location, and which when clicked on, automatically selects the next item in the list within that menu. In this way the mouse can be positioned just once, and then clicked as often as needed without further motion, allowing the operator to continuously observe, without interruption, what effect, if any, is produced in the affected result (which may be, but are not necessarily, alterations in a composite eye diagram). There may be more than one button; one for traversing the list of the menu in each direction. Traversing (i.e., automatic selection of an adjacent entry in the list that comprises the choices of the menu) might be one step at a time (one step per click), or if the click is extended (switch on the mouse remains closed beyond a certain length of time), be automatically repeated at some convenient rate, say, once per second. The rate of automatic traversal can be adjustable. The traverse of the list can include "wrapping," where the next selected item after reaching one end of the list is the item at the other end of the list, whereupon the traverse continues from that point. After each step in the traverse the name or descriptive legend for the selected menu entry is displayed in a location associated with the menu, so that when something interesting is noted and the traverse ended, it is not necessary to open the menu to discover which selection caused the condition of interest. On the other hand, one can initially open the menu in a conventional manner and pre-select the starting point of the assisted traverse described above, so that the starting point for that traverse will be within or near a region of the list of menu items that is suspected as being of interest.

Embodiments of the present invention are described below, by way of example only, with reference to the accompanying drawings in which:
Figure 1 is a simplified block diagram depicting a menu-driven Eye Diagram Analyzer coupled to a System Under Test and measuring a composite eye diagram having a highlighted channel selected in accordance with the invention;
Figure 2 is a more detailed view of the eye diagram and control menus for the Eye Diagram Analyzer of Figure 1, and is a composite eye diagram indicative of at least one defective component signal in the system Under Test;
Figure 3 is an expansion of a drop down menu having arbitrarily ordered menu items related to the implementation of an associated result, and which are automatically and sequentially selectable;
Figure 4 is the menu of Figure 3 showing an initial selection from which later automatic sequential selection will proceed;
Figure 5 is the menu of Figures 3 and 4 after the initial selection has been performed and the menu has been closed in preparation for automatic sequential selection;
Figure 6 is a depiction of an implemented associated highlighted eye diagram resulting from the selection indicated by the menu of Figure 5, and is indicative of a normal signal;
Figure 7 is the menu of Figure 5 after one instance of automatic sequential selection;
Figure 8 is the menu of Figure 7 after another instance of automatic sequential selection;
Figure 9 is the menu of Figure 8 after still another instance of automatic sequential selection;
Figure 10 is a depiction of an implemented associated highlighted eye diagram resulting from the selection indicated by the menu of Figure 9, and is indicative of a defective signal;
Figures 11A -B are simplified flowcharts describing one manner in which the automatic sequential selection of the menu items can be accomplished; and
Figures 12A -B are simplified flowcharts describing another manner in which the automatic sequential selection of the menu items can be accomplished.

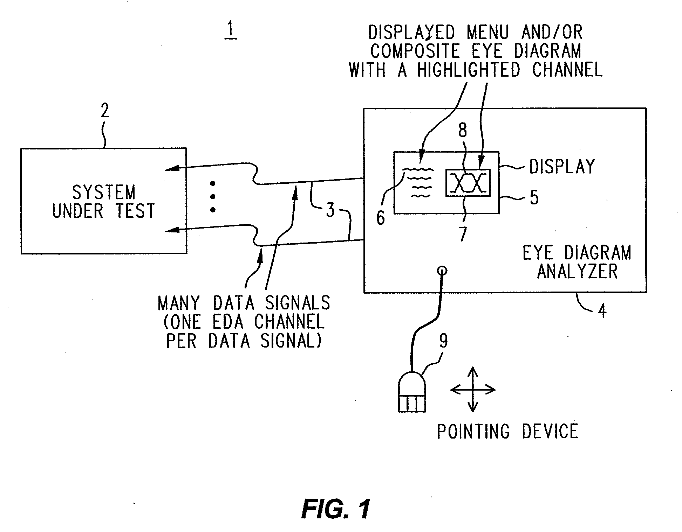

Refer now to Figure 1, wherein is depicted a simplified block diagram 1 of an example hardware environment wherein automatic sequential selection and implementation of items in an arbitrarily ordered list of menu items is useful. In particular, data signals within a System Under Test (SUT) 2 are coupled by a plurality of probe connections 3 to a respectively associated plurality of channels within an Eye Diagram Analyzer (EDA) 4. The EDA has a display 5 upon which are visible various menus 6 and other Graphical User Interface (GUI) elements 6 in order that within a window 7 various displayed results 8 may be presented. In this particular example the displayed results that are most of interest are composite eye diagrams having a highlighted channel that has been selected during a process of discovery to learn which data signal(s) is(are) operating defectively. As part of the equipment to manipulate the GUI the EDA 4 is equipped with a pointing device 9, of which there are several possible varieties, and which in this example happens to be a mouse.

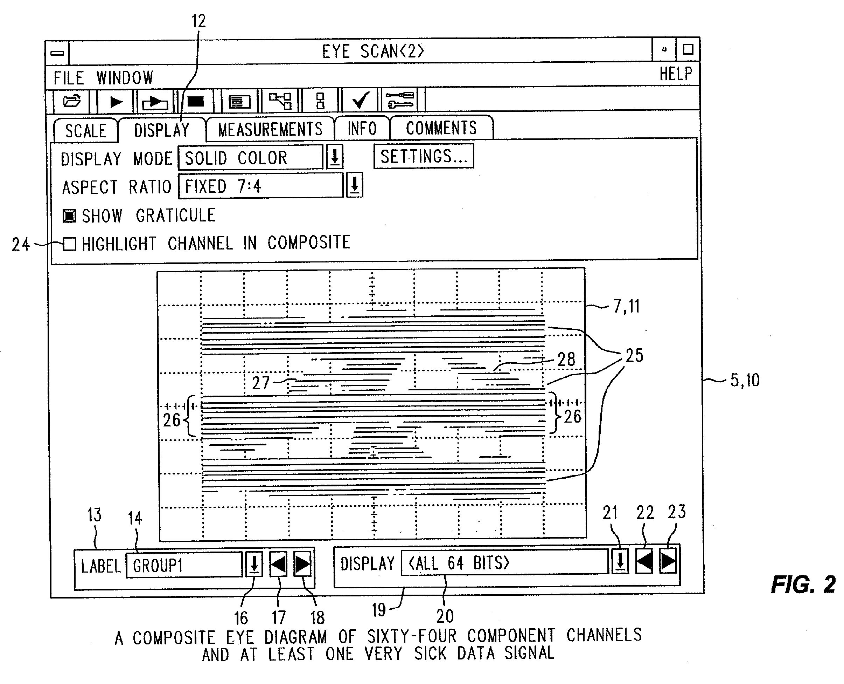

As mentioned above, the EDA is a menu-driven apparatus. And while it is not our specific intent to instruct the reader on the measurement of eye diagrams, it is still the case that our initial example of making and using the system and method taught herein is drawn from one aspect of such measurement. To this end, Figure 2 is a somewhat detailed depiction of a window (5, 10) containing various menus and results for a composite eye diagram measurement. We shall dwell here only briefly; just long enough to enable the general reader to appreciate the operation and utility of what is to follow. The example is very similar to one that is described in more detail in the application "COMPOSITE EYE DIAGRAMS", and those who may be curious about all the ancillary matters we won't mention can refer to that disclosure.

To begin, then, a couple of notes are in order about the actual composite eye diagram 25 depicted in the measurement window/region (7, 11). First, it is a composite eye diagram. That means that it is the "merging" or "overlaying" of several (and perhaps a great many) individual "component" eye diagrams. Next, the "trace" that is the visible substance of the composite eye diagram 25 is depicted in the drawing as parallel lines. In reality, is it actually formed by (usually) adjacent pixels of particular (i.e., a combination of assigned and computed) colors and intensities. We can't, of course, get away with that in a Patent, so we depict it as shown. The eye diagram 25 is a composite, since selected legend 20 in menu 19 is "<All 64 bits>". It is a "simple" composite in that it does not include the highlighting of a selected channel, since box 24 ("Highlight channel in composite") has not been checked. (The particular collection of controls related to the eye diagram 25 that appear on the screen and within window 10 is determined by which "tab" has been selected; in this example the "Display" tab has been selected, and is in front of all the other tabs.) The sixty-four bits referred to by legend 20 are known as "Group 1", according to legend 14 in menu 13. All this means is that there is a user defined collection of sixty-four related data signals that are conveniently grouped together and given a label. That label is "Group 1", and the mechanics of defining Group 1 are outside the scope of our present interest. There might be other groups, and the Menu Expansion control (button) 16 will expose a drop down menu beneath legend 14 to reveal what other labeled groups may have been defined and are selectable in place of Group 1 as the source for the displayed composite eye diagram. We shall touch on the other menu controls 17 and 18 at a later time.

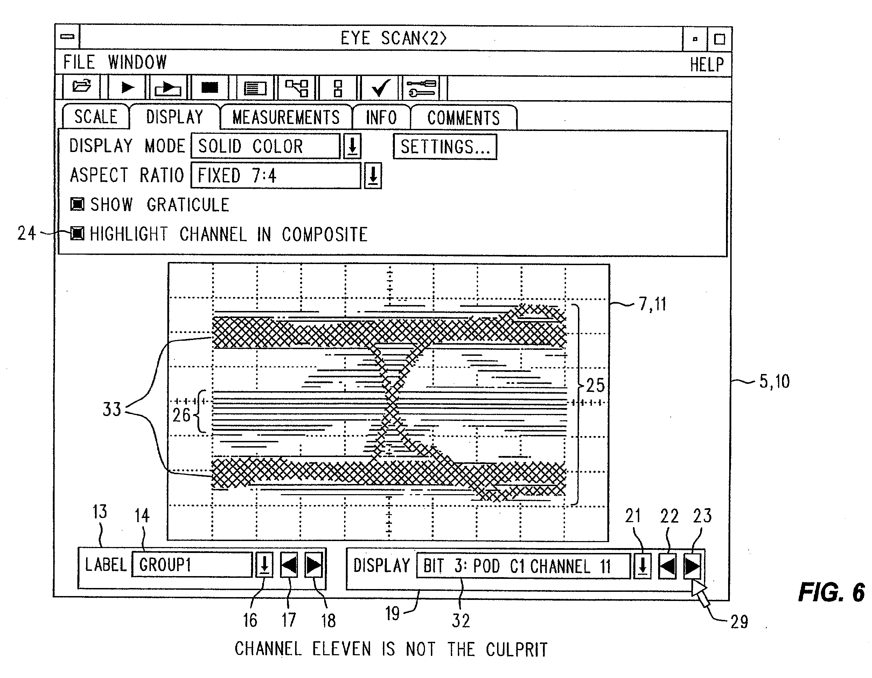

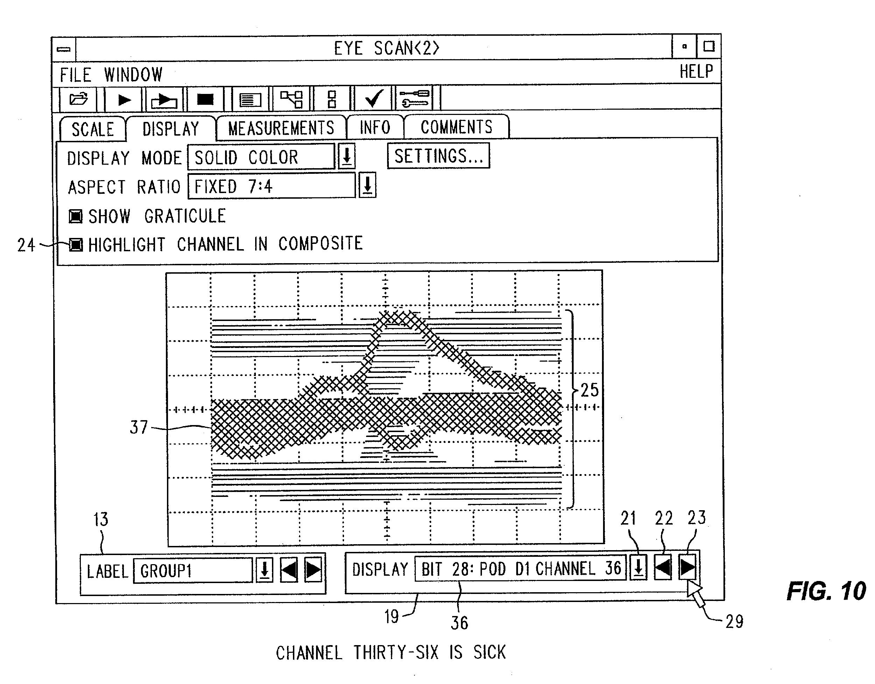

As eye diagrams go, eye diagram 25 is pretty ugly, even for a composite of sixty-four separate signals. In particular it has, among other warts, a horizontal region 26 and transition regions 27 and 28 that the operator deems indicative of some serious defects in data signal behavior. The problem at hand is discover which data signal(s) is(are) to blame. One of the ideas behind being able to highlight the portion of an eye diagram associated with a particular data signal (channel) is to aid in discovering defective data signals. A highlighted channel has its pixels displayed as a superimposed component eye diagram, but in a visually distinct manner, such as blinking, increased intensity or changed color. (Whether the composite remains the composite of all the components, including the highlighted one, or just that of the other components with the highlighted channel "subtracted out", is a matter of choice in EDA operation.) When the time comes (Figures 6 and 10) we shall depict such highlighting as a cross hatched region within the composite eye diagram.

So far, so good, but our sick composite eye diagram 25 has SIXTY-FOUR (and that number is modest compared to what is actually possible!) individual components, and we are quite understandably interested in avoiding any complicated maneuver to produce a highlighted channel, since we might have to repeat it up to sixty-four times in order to assess each individual channel. In particular, we especially want to avoid having to repeatedly redirect our visual attention to a portion of a drop-down or pop-up menu produced by clicking on Menu Expansion button 21. Accordingly, we would like to be able to park the mouse someplace, go click-click-click ... with our finger while continuously watching (without. interruption) a displayed composite eye diagram having a different highlighted channel with each click, and assess by observation ofthe highlighted channel which channels are good and which are bad. ("Oooh, that one's really bad!" and perhaps through an accompanying change in a ['subtracted-out'] composite: "Hey, it just got better!") Actually "seeing it wiggle" helps in this process, since the 'before' and 'after' views for any given channel-to-channel transition may be only a matter of degree, and might easily be misjudged if the change occurs while one's attention is focused elsewhere. In addition, the kind of operation we seek is simply faster, since fewer manipulative operations on the part of the operator are required, compared to conventional menu item selection techniques. To perform this streamlined selection of highlighting (described below) we shall use Next Item Selection button 22 and Previous Item Selection button 23, perhaps in conjunction with Menu Expansion button 21.

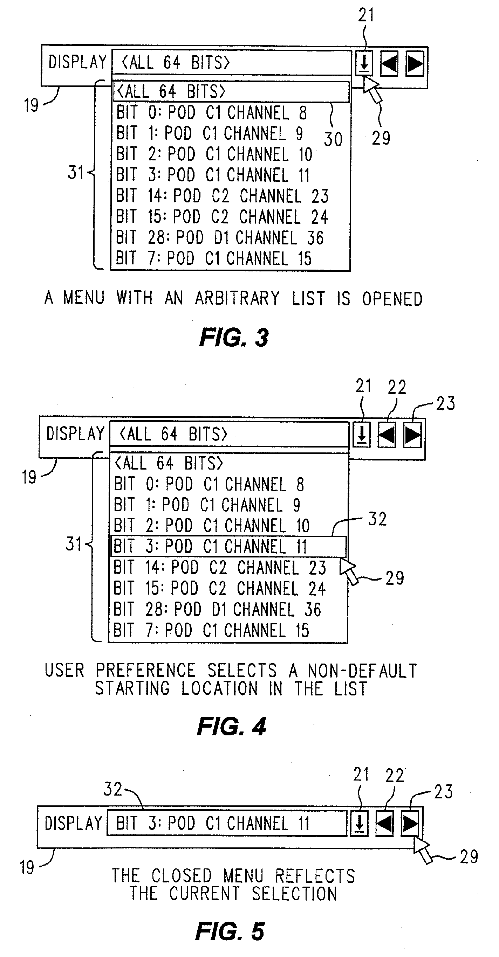

Without further ado, then, refer now to Figure 3. A mouse pointer (or screen pointer) icon 29 has been positioned (by operator motion of mouse 9) over or sufficiently proximate Menu Expansion button 21, which button was then "clicked" in conventional fashion to produce an opened drop-down (or perhaps pop-up) menu 31. Menu 31 is a list of menu items including the already selected <All 64 bits> legend (menu list item 30). Beneath that are, in some arbitrary order related to how they were defined, other menu items in the list 31. In this menu list 31 those other menu items are the various combinations of the bit numbering scheme, the probe pod and signal input therein used for a bit, and the channel assignment given to that combination. Whether the indicated correspondence proceeds in a nice regular fashion, or is "jumpy" just depends on how things work out, what resources are available, and operator preference. The point is that the list of menu items 31 might be entirely arbitrary. And while there is of course, an order (it's irregular, but it is still an order), one can't count on being able to simply increment the channel number or the bit number to produce it. In a purely conventional system one would have to move the pointer icon 29 down to the next item in the list to select that next item. That is the very thing we seek to avoid, since we would have to look at the menu to do it.

Now, we might have good reason to suspect that the trouble does not involve channels eight, nine or ten. Say, we already had an earlier occasion to investigate them, and they were clean, so to speak. So, to save time we would like to begin our automatic sequential selection ofthe menu items in the list with channel eleven. Such a starting channel can be individually selected by positioning the pointer icon 29 over the menu item (say, 32) to be selected. The selection is recognized by a change in background and a switch to reverse video for the legend of that item. Refer to Figure 4. Once this initial selection is made the menu 19 closes, and appears as shown in Figure 5. That is, menu list item 32 appears in the window of closed menu 19.

At the same time, the composite eye diagram 25 changes to show a highlighted channel eleven. See Figure 6, and note the cross hatched region 33. Note also that box 24 is now checked; the operator would do that now or would have already done that some time previously. (Note that, in honor of box 24 being checked, menu 19 now identifies itself as "Highlight" instead of "Display".)

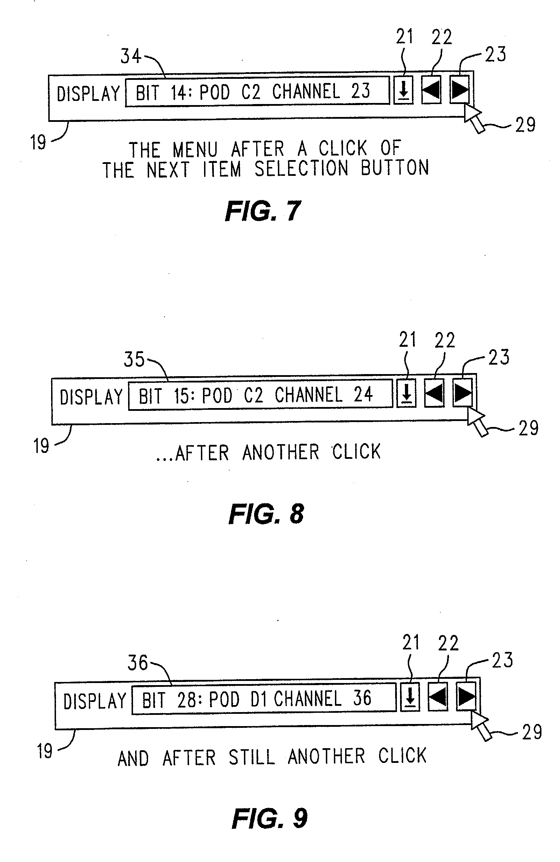

The operator inspects the eye diagram 25 in Figure 6, and decides that there is nothing wrong with channel eleven. At this point (or perhaps previously) pointer icon 29 is positioned on, over or sufficiently proximate Next Item Selection button 23, as shown in Figures 5 and 6. Having decided that channel eleven is "clean" and while probably still having his hand on the mouse (the better to not move it), the operator clicks Next Item Selection button 23. The Display menu 19 changes to appear as shown in Figure 7. The displayed legend 34 is "bit 14: Pod C2 Channel 23". Note that this is the menu list item beneath the one (32) associated with Figure 5. Clicking on the Next Item Selection button 23 traverses down the list of menu items 31, selecting the next item downwards at each click, and there will be a corresponding highlighted composite eye diagram visible in window 7, 11. Let us suppose that it is essentially the same as the highlighted composite eye diagram shown in Figure 6. That is to say, channel twenty-three is also clean. Time to try the next channel.

Once again the operator clicks on Next Item Selection button 23. Now the Display menu 19 changes to appear as shown in Figure 8, with the legend 35 being "bit 15: Pod C2 Channel 24". Note that this is the menu list item beneath the one (34) associated with Figure 7. Clicking on the Next Item Selection button 23 traverses down the list of menu items 31, selecting the next item downwards at each click. Once again the displayed highlighted composite eye diagram will change to reflect highlighting channel twenty-four, as opposed to the previous highlighting of channel twenty-three. Let us once again suppose that channel twenty-four is normal, and we omit a figure corresponding to Figure 6 for channel twenty-four.

Now the operator gives the Next Item Selection button 23 still another click. This produces a selection of channel thirty-six. See Figure 9. This time however, the operator has discovered the culprit. See Figure 10, and note that cross hatched region 37 (the highlighting of channel thirty-six) accounts for the misbehaving regions 26, 27 and 28 of Figure 2, which is what we set out to discover. The operator observes the legend 36 "bit 28 Pod D 1 Channel 36" and notes with satisfaction that he and his trusty EDA have caught channel thirty-six *in flagrante delicto*, with just few clicks of a mouse button, and without having to take his eyes off of the eye diagram 25.

Now for some variations. What Previous Item Selection button 22 does is traverse the list of menu items in the other (upward) direction. Once a traverse is begun, in either direction, when the end of the list is reached (excluding the "<All ... bits>" pro forma entry), the next item in the traverse is the item at the other end of the list. That is, the traverse wraps, but skips the pro forma entry "<All ... bits>". This make good sense, since highlighting all bits is equivalent to no highlighting at all What's more, it may be desirable to arrange things so that if there is no initial selection as in Figures 4 and 5, an initial use of the one of the Item Selection buttons (22, 23) defaults to the top of the menu item list (for button 23) and to the bottom of the list (for button 22). Also, we note that for other applications of the Next Item and Previous Item Selection buttons, the nature of the environment within which something is automatically done with the selected item (i.e., how it is "implemented" once selected) may be such that there is nothing that corresponds to highlighting, and no menu entry corresponding to the "<All ... bits>" pro forma entry (which essentially means "select all"). Perhaps highlighting (and the pro forma or "select all" entry) are specific to a particular class of applications, within which is composite eye diagrams. None the less, it still makes good sense in many classes of applications to be able to automatically and sequentially cycle through the items in a menu, where there is a distinctly appreciated automatic implementation for each selection, whether or not the "select all" choice is in the menu. And we might add, it may also make good sense in some applications to have a "select none" choice as part of the menu. Later, we shall offer some further examples.

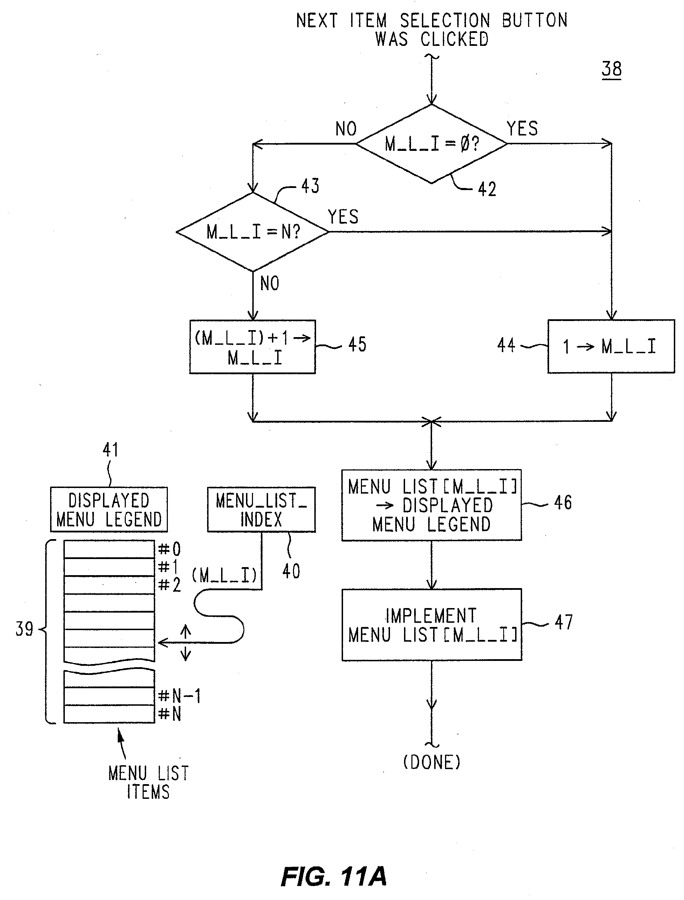

Meanwhile, refer now to Figure 11A, which is a simplified flowchart 38 describing a particular way in which the automatic (next) sequential selection and implementation for a menu can be accomplished. Note that there is shown a list of menu items 39, which corresponds to list 31 of Figures 3 and 4. In this figure (11A) there are N+1 items in the list, since we start with menu list index value of zero and go to N. The variable Menu_List_Index 40 (abbreviated M_L_I) is a pointer whose value determines which menu item in the list 39 is the selected item. With all that in mind, note that when the Next Item Selection button 23 is clicked, a qualifier 42 determines if the value of M_L_I is zero. If it is (which we are assuming represents a pro forma menu list item such the <All 64 bits> legend, which is not to be selected by this mechanism), then at sep 44 we set M_L_I to a default value of one, which is at the start of the range that we will automatically and sequentially select from. The operator could, of course, already set M_L_I to some value 0<K≤N using the regular conventional methods for menu item selection. If, on the other hand, M_L_I is non-zero, then a qualifier 43 determines if its value is N. If it is, then it is time to wrap around to the other end of the list, by a transition to step 44, where its value will be set to one.

At this point the next value of M_L_I has been produced, and step 46 displays the associated menu item as the selected choice (see items 32, 34, 35, and 36 in Fig's 5, 7, 8 and 9, respectively). The notation "MENU LIST [M_L_I]" in step 46 is a subscript notation that means "the menu list item pointed at by the value of M_L_I. Following that, the selected menu item, which is "MENU LIST [M_L_I]", is put into effect, or implemented. In our example case of an EDA where a composite eye diagram is being investigated, implementation means "highlight the selected channel". In some other system "implementation" might mean something else.

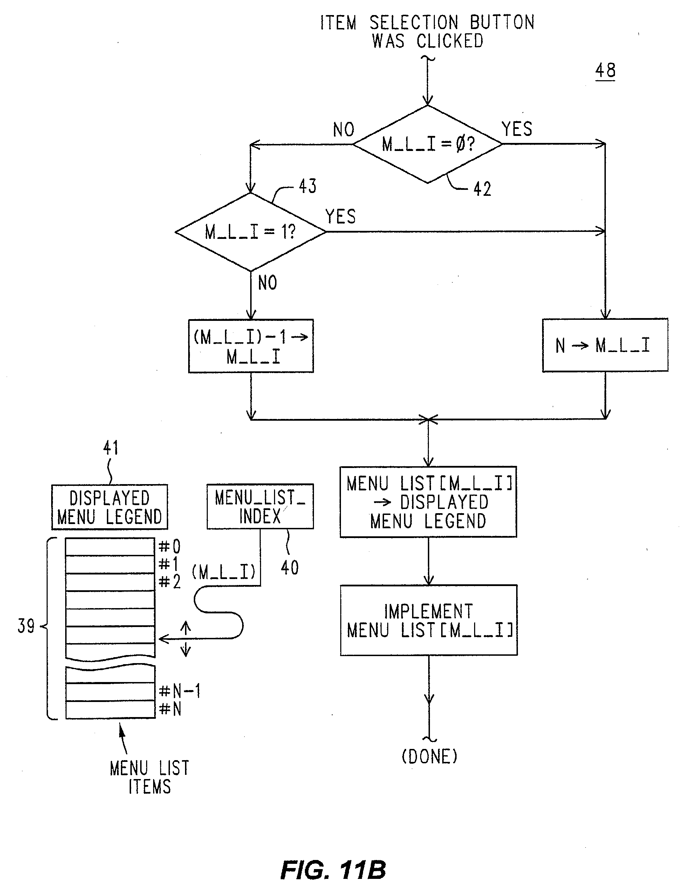

Figure 11B is a flowchart 48 similar to that of Figure 11A, except that it is for the Previous Item Selection button 22. The differences are minor, involving the direction in which the Menu_List_Index 40 is adjusted for wrapping, and direction in which it is stepped (it is decremented instead of incremented).

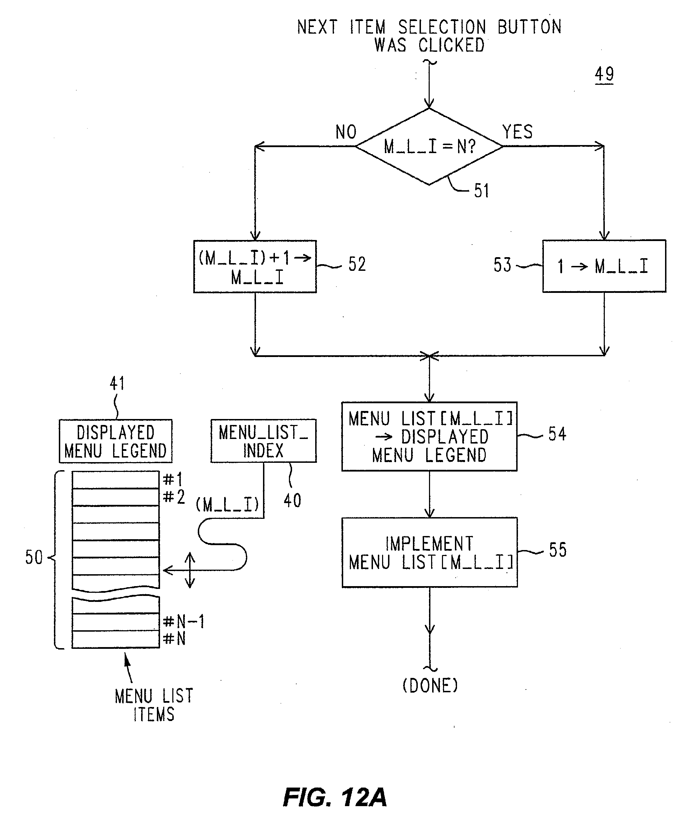

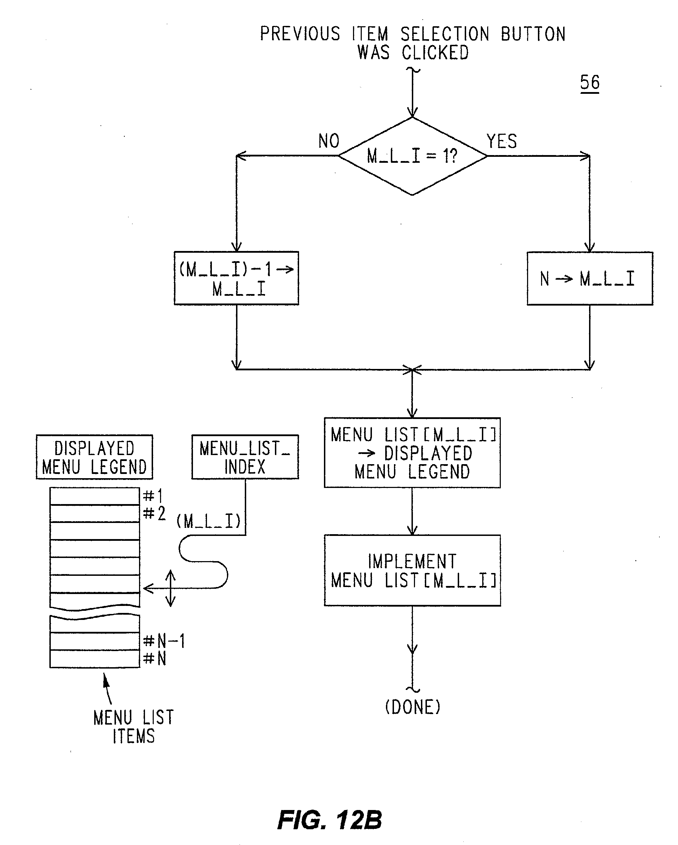

Figures 12A-B are similar to Figures 11A-B, except that they do not involve the notion of a pro forma menu entry that is to be excluded from the automatic sequential traverse of the list of menu items. So, for example, the flowchart 49 of Figure 12A for a Next Item Selection begins with a qualifier 51 that detects the need to wrap around (value of M_L_I has already reached N). In this particular example the range of values for M_L_I has been set at 1≤M_L_I≤N. (It could just as easily have remained 0≤M_L_I≤N). In any event, if a wrap is needed, then step 53 assigns M_L_I the value at the other end of the range, else step 52 steps the value of M_L_I by one. After that, steps 54 and 55 operate as do steps 46 and 47 (of Figure 11A). The flowchart 56 of Figure 12B is similar, but is set up to traverse the list of menu items in the other direction.

Finally, we offer some further examples of how automatic sequential selection and implementation of items in a menu list can be used. Refer again to Figure 2, and note that the Group Selection menu 13 is also equipped with Next and Previous Item Selection buttons (18 and 17, respectively). What this does is allow automatic incremental selection from among a list of groups. So, for example, one can view the composite eye diagram for all channels in the group (set the <All 64 bits> choice in menu 19) while stepping through the various groups within menu 13. This is a fast and convenient way to check all groups, one group at a time, for bad channels.

Alternatively, suppose there were in a computer's file system a directory of images. Suppose also that the file names were not particularly helpful in suggesting the nature of the image stored in that file. If a directory listing were the menu items selectable as set out above, and the implementation were to point an already executing viewer at the selected file, then a user would have an easy way to visually peruse the collection of images in that directory. A similar example exists for a directory whose contents are audio files, provided the implementation action is changed to playing the audio.

There is yet a further generalization. Suppose that the menu whose list of items are to be the automatically and sequentially selected choices includes a place to specify a shell command line that can be written using a parameter that will be substituted by the automatically selected menu list item. The notion of "implementation" is now defined to be executing the command line after substitution for the parameter by the next selected menu item. Now the effective implementation can be user specified to be anything that the shell can do.

Such a generalized mechanism can be extended even further. The contents of a file system directory is a list of files that can often be thought of as a list of choices for an associated operation. It could be used for, say, selective operation upon the files in a directory by making the command line contain the desired command. An implicit or explicit parameter substitution mechanism (auch as already known to shell programmers) arranges that the command operates on the file names selected from within the directory listing appearing within the menu. So, consider a menu that includes a place to specify a directory name. The content of the specified directory produces a list of file names that is the list of menu choices. The menu also supplies a place to specify the command and its options (the UNIX shell commands lp, 11, head, etc., are useful examples).

To conclude this description, we also note that the Next Item and Previous Item Selection buttons (17 & 18, 22 & 23) could also be implemented by taking note of which of a plurality of mouse buttons was clicked. Say, for example, there were only one Item Selection button visible on the menu (say, having a double-headed arrow), instead of the two separate buttons we presently show. Then, when the screen pointer icon 29 points to that solitary button, whether the selection is "Next" or "Previous" depends on which mouse button is clicked. This further assists the operator in that now the mouse can remain absolutely still during a two direction selection process.

The disclosures in United States patent application no. 10/120,565, from which this application claims priority, and in the abstract accompanying this application are incorporated herein by reference.

## Claims

1. A method of selecting a next item (34/35/36) in an ordered list of items (31) within a menu, including the steps of:
(a) positioning with motion of a user operated pointing device (9) a screen pointer icon (29) proximate a next item selection icon (23) that is proximate a legend (34) representing a currently selected item within the ordered list, the ordered list being displayable as the menu in response to an operation involving a menu icon (21);
(b) while the screen pointer icon is positioned as in step (a), actuating a switch on the user operated pointing device;
(c) in response to step (b), automatically selecting as a new currently selected item (35) an item from within the ordered list and which is adjacent, within the order of the list and in a direction associated with the next item selection icon, to that item that previously was the currently selected item at the time step (b) occurred, and
(d) subsequent to step (c), displaying in place of the legend in step (a) a new legend (35) representing the automatically and newly selected item of step (c).

2. A method as in claim 1, including the step (e) of, subsequent to step (c), automatically implementing an action (37) based upon the selection of an item in the ordered list.

3. A method as in claim 1 or 2, including the step, prior to step (a), of user definition (13/14) of the items in the ordered list.

4. A method as in claim 1, 2 or 3, wherein prior to step (a) an initial selection from the ordered list is made by performing the steps comprising:
(a1) positioning with motion of the user operated pointing device (9) the screen pointer icon (29) proximate a desired item (32) in an ordered list of items in the menu;
(a2) while the screen pointer icon is positioned as in step (a1), initially selecting the desired item as the selected item by actuating the switch on the user operated pointing device; and
(a3) subsequent to step (a2), displaying a legend (32) representing the initially selected item of step (a2).

5. A method as in any preceding claim, including the steps of displaying a composite eye diagram (25) whose components are signals associated with the items in the ordered list and highlighting that portion (37) of the displayed composite eye diagram corresponding to a component thereof (36) whose associated item in the ordered list (31) was selected in accordance with steps (a) through (d).

6. Menu apparatus provided with a pointing device (9) with motion signals and a user actuatable switch, a display device (5) and a processor mechanism operable to write to the display device a menu (19/31) of implementable items selectable in response to the motion signals and to user activation of the switch, the menu apapratus including:
a screen pointer icon (29) whose position in the display is in response to the motion signals;
an ordered list of menu items (31), selectable one at a time;
a displayed legend (19 & (34/35/35) indicating a selected menu item;
a next-item-in-the-ordered-list selection icon (23);
the processor mechanism being operable to respond to an actuation of the switch while the screen pointer icon is proximate the next-item-in-the-ordered-list selection icon by de-selecting a currently selected menu item and to select the next menu item in the ordered list, by altering the displayed legend to reflect that activity, and by implementing the newly selected menu item.

7. Menu apparatus as in claim 6, including:
a previous-item-in-the-ordered-list selected icon (22);
the processor mechanism being operable to respond to an actuation of the switch while the screen pointer icon (29) is proximate the previous-item-in-the-ordered-list selection icon by de-selecting a currently selected menu item and to select the previous menu item in the ordered list, by altering the displayed legend to reflect that activity, and by implementing the newly selected menu item.

8. Menu apparatus as in claim 6 or 7, including:
eye diagram data acquisition and analysis mechanisms (4) for a plurality of data signals (3) applied to respective eye diagram channels; and
the processor mechanism is operable to implement the selected menu item by highlighting a component portion (33/37) of a composite eye diagram corresponding to the data signal applied to the selected eye diagram channel.
